# FASCICULE DE BREVET EUROPEEN

(11) **EP 1 195 282 B1**
(45) Date de publication et mention de la délivrance du brevet: **21.12.2005**
(21) Numéro de dépôt: 01402521.7
(22) Date de dépôt: 01.10.2001
(51) Int. Cl.: B60K 17/04, E02F 3/28

(54) **Véhicule automoteur à bras chargeur télescopique et comprenant une boîte de vitesses**
Kraftfahrzeug mit teleskopischem Ladearm und ein Getriebe umfassend
Motor vehicle with telescopic loader arm and including a gearbox

(30) Priorité: 09.10.2000 FR 0012861
(43) Date de publication de la demande: 10.04.2002
(73) Titulaire: MANITOU BF, F-44150 Ancenis (FR)
(72) Inventeur: Braud, Marcel-Claude, 44150 Saint Herblon (FR)
(74) Mandataire: Kaspar, Jean-Georges

(56) Documents cités:
- EP-A- 0 909 670
- EP-A- 0 937 827
- DE-A- 3 925 409
- FR-A- 2 164 001
- GB-A- 2 154 963
- US-A- 1 991 575
- PATENT ABSTRACTS OF JAPAN vol. 1995, no. 04, 31 mai 1995 (1995-05-31) & JP 07 009870 A (YAMAHA MOTOR CO LTD), 13 janvier 1995 (1995-01-13) & JP 07 009870 A (YAMAHA MOTOR CO LTD) 13 janvier 1995 (1995-01-13)

## Description

L'invention est relative à un véhicule automoteur à bras chargeur télescopique équipé d'une boîte à vitesses.

On connaît des véhicules automoteurs à bras chargeur télescopique fabriqués et commercialisés par la Société MANITOU BF de droit français, dans lesquels un moteur diesel est orienté transversalement à l'axe longitudinal de la machine. EP 0 937 827 divulgue un tel véhicule comportant toutes les caractéristiques du préambule de la revendication 1.

Le moteur diesel entraîne un renvoi d'angle, dont une sortie entraîne une boîte de vitesses orientée longitudinalement et placée sensiblement en position centrale et dont une autre sortie entraîne constamment une pompe hydraulique dès le démarrage du moteur.

Ces machines donnent généralement satisfaction, mais présentent un grand nombre d'organes mécaniques (accouplement élastique, transmission à cardans, renvoi d'angle, convertisseur de couple, boîte de vitesses), dont certains sont montés dans des carters individuels devant être assemblés entre eux.

Cette technique conduit à un encombrement notable de l'assemblage réalisé et à une fabrication coûteuse des moyens de transmission mécanique de ces machines.

L'invention a pour but de remédier aux inconvénients de la technique connue, en proposant un véhicule automoteur à bras chargeur télescopique équipé d'une nouvelle boîte de vitesses de construction simple et économique et d'encombrement réduit.

L'invention a pour objet un véhicule automoteur à bras chargeur télescopique équipé d'une boîte de vitesses, tel que définit dans la revendication 1.

Selon d'autres caractéristiques avantageuses de l'invention :
- la boîte de vitesses comporte en outre un arbre traversant de prise de force, agencé pour entraîner une pompe génératrice d'énergie hydraulique ou hydrostatique
- le renvoi d'angle comporte un double pignon conique : un pignon de marche avant et un pignon de marche arrière, avec au moins un embrayage associé,
- la boîte de vitesses est entraînée par un convertisseur de couple relié à l'entraînement de sortie du moteur à combustion interne en constituant le premier organe menant de la boîte de vitesses, tandis que le renvoi d'angle est le deuxième organe menant solidarisé à la turbine du convertisseur.
- la première ligne d'arbre correspondant au renvoi d'angle comporte un double pignon conique engrenant avec un pignon conique apte à être entraîné par l'arbre de sortie du moteur, et un double embrayage pour l'entraînement sélectif d'une roue dentée de marche avant ou d'une roue dentée de marche arrière, et ces deux roues dentées de marche avant et de marche arrière engrènent continûment avec des roues dentées du deuxième arbre intermédiaire de transmission,
- la deuxième ligne d'arbre comporte plusieurs roues dentées de transmission du mouvement imprimé par la première ligne d'arbre à des roues dentées correspondantes de la troisième ligne d'arbre avec lesquelles elles sont constamment en prise,
- lesdites roues dentées correspondantes de la troisième ligne d'arbre sont montées libres en rotation sur le troisième arbre, en étant aptes à entraîner ce troisième arbre sous l'action de moyens d'embrayage ou de crabotage,
- la troisième ligne d'arbre comporte en outre une roue dentée montée solidaire du troisième arbre et engrenant avec une roue dentée débrayable de la deuxième ligne d'arbre, de manière à fournir un nombre de vitesses en marche avant plus important que le nombre de vitesses en marche arrière,
- la troisième ligne d'arbre comporte deux sorties d'arbre destinées à entraîner simultanément un pont moteur avant et un pont moteur arrière d'un véhicule automoteur, notamment d'un véhicule à bras chargeur télescopique.

L'invention sera mieux comprise grâce à la description qui va suivre donnée à titre d'exemple non limitatif en référence aux dessins annexés dans lesquels :
- La figure 1, représente schématiquement en vue de dessus l'agencement cinématique d'un mode de réalisation de véhicule automoteur selon l'invention.
- La figure 2, représente schématiquement une vue de côté d'une boîte de vitesses selon l'invention.
- La figure 3, représente schématiquement une chaîne cinématique d'un premier mode de réalisation de boîte de vitesses selon l'invention.
- La figure 4, représente schématiquement une chaîne cinématique d'un deuxième mode de réalisation de boîte de vitesses selon l'invention.
- La figure 5, représente schématiquement une chaîne cinématique d'un troisième mode de réalisation de boîte de vitesses selon l'invention.
- La figure 6, représente schématiquement une vue en perspective d'un assemblage comportant une boîte de vitesses selon l'invention, représentée avec arrachement partiel du carter.

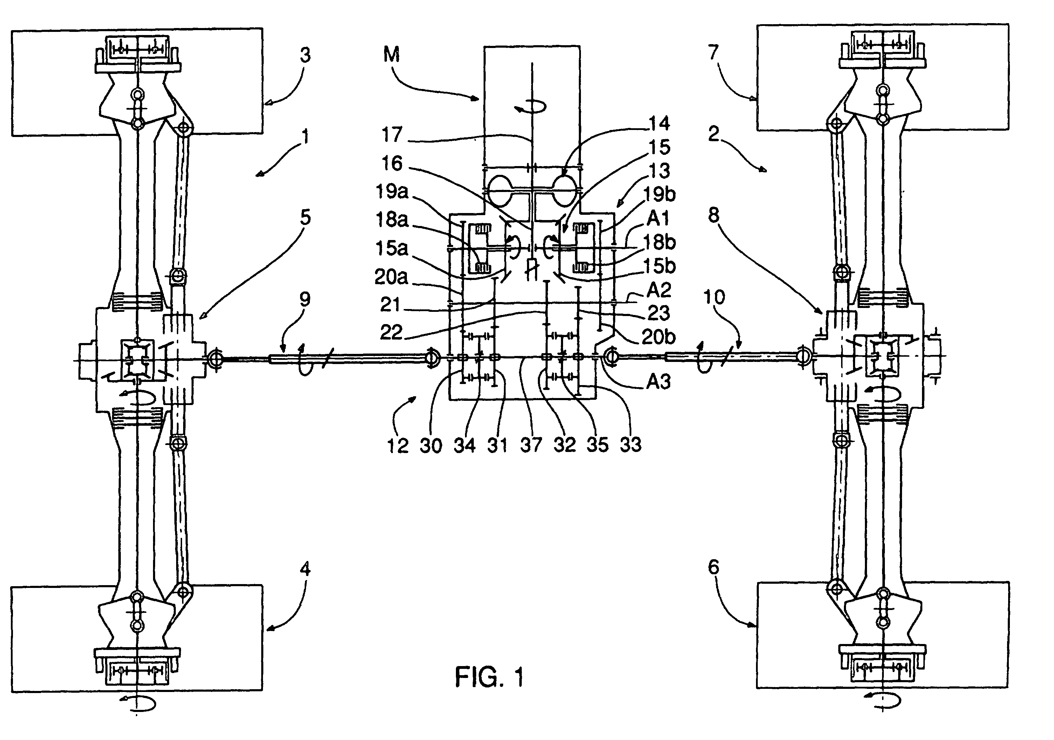

En référence à la figure 1, un mode de réalisation d'un véhicule selon l'invention comporte un agencement cinématique avec un pont avant 1 et un pont arrière 2. Le pont avant 1 est un pont à différentiel autobloquant à glissement limité, entraînant deux roues avant 3 et 4 motrices et directrices. La direction de l'essieu avant est une direction hydrostatique à vérin central 5 à double tige.

Le pont arrière 2 est un pont à différentiel autobloquant à glissement limité pour l'entraînement et l'orientation de deux roues arrière motrices et directrices 6 et 7. La direction de l'essieu arrière est également une direction hydrostatique à vérin central 8 à double tige.

L'entraînement de l'essieu avant 1 est assuré par l'intermédiaire d'un arbre à cardans 9, tandis que l'entraînement de l'essieu arrière 2 est assuré par l'intermédiaire d'un arbre à cardans 10. Les arbres à cardans 9 et 10 sont reliés à deux sorties correspondantes d'une boîte de vitesses 12 conçue de manière que les arbres à cardans 9 et 10 soient entraînés simultanément à la même vitesse lorsque le véhicule se déplace et pour que les arbres à cardans 9 et 10 soient immobilisés simultanément lorsque le véhicule est au repos.

La boîte de vitesses 12 comporte un carter 13 entourant un convertisseur de couple 14 ou embrayage équivalent à arbre creux, apte à entraîner un renvoi d'angle 15 à double pignon conique.

Le convertisseur 14 à arbre creux et le renvoi d'angle 15 sont traversés par un arbre central 16 de prise de force solidarisé à l'arbre 17 de sortie du moteur M, ou au volant d'inertie du moteur M à combustion interne de manière à entraîner constamment l'arbre 16 de prise de force dès le démarrage du moteur M. L'arbre 16 de prise de force est avantageusement destiné à entraîner une pompe génératrice d'énergie hydraulique ou hydrostatique, non représentée et extérieure au carter 13 de la boîte de vitesses 12.

De préférence, le convertisseur 14 à arbre creux ou embrayage équivalent est relié à l'entraînement de sortie du moteur M à combustion interne en constituant le premier organe menant de la boîte de vitesses 12, tandis que le renvoi d'angle 15 est le deuxième organe menant solidarisé à la turbine du convertisseur 14 à arbre creux et intégré dans le carter 13 de la boîte de vitesses 12.

Le renvoi d'angle 15 à double pignon conique comporte un pignon 15a de marche avant avec un embrayage associé 18a et un pignon 15b de marche arrière avec un embrayage associé 18b.

Le carter 13 de la boîte de vitesses 12 contient trois lignes d'arbre parallèles A1, A2, A3.

La première ligne d'arbre A1 correspondant au renvoi d'angle 15 comporte pour la marche avant : le pignon 15a, l'embrayage associé 18a et la roue dentée de marche avant 19a ; et pour la marche arrière : le pignon 15b, l'embrayage associé 18b et la roue dentée de marche arrière 19b.

Les roues dentées de marche avant 19a ou de marche arrière 19b engrènent continûment avec des roues dentées 20a, 20b du deuxième arbre intermédiaire A2 de transmission, lequel comporte également des roues dentées 21, 22, 23 solidaires en rotation des roues dentées 20a, 20b.

Chaque roue dentée 20a ou 21 ou 22 ou 23 engrène continûment avec une roue dentée 30 ou 31 ou 32 ou 33 de la troisième ligne d'arbre A3 d'entraînement des arbres à cardans 9 et 10 de ponts avant 1 et arrière 2.

Les roues dentées 30 à 33 sont montées libres en rotation sur la troisième ligne d'arbre avec possibilité de crabotage ou d'entraînement synchronisé équivalent avec des couronnes 34, 35 montées solidaires en rotation de la troisième ligne d'arbre, de préférence montées sur des cannelures du troisième arbre 37 avec possibilité de déplacement latéral sous l'action de commandes mécaniques de type connu en soi et non représentées.

Le crabotage d'une couronne 34 ou 35 avec une des roues dentées 30 à 33 permet ainsi de sélectionner la vitesse d'avancement, soit en marche avant, soit en marche arrière.

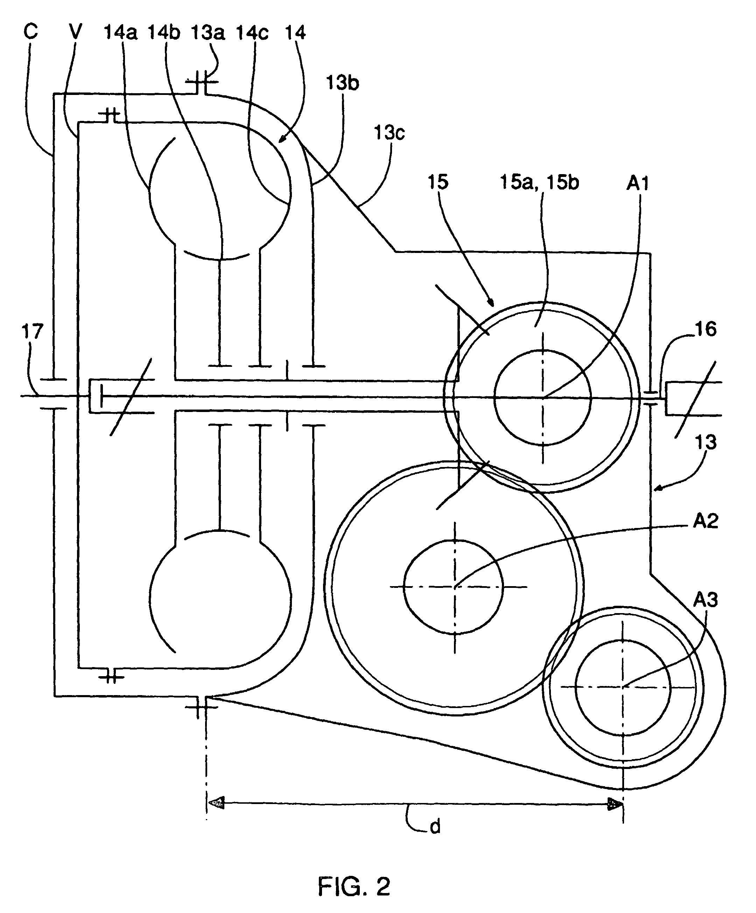

En référence aux figures 2 à 4, les éléments identiques ou fonctionnellement équivalents aux éléments de la figure 1 sont repérés par des chiffres de référence identiques.

Sur la figure 2, le carter 13 comporte une bride 13a de montage sur le carter C du volant d'inertie V du moteur M non représenté. Le convertisseur 14 à arbre creux comporte une turbine 14a à arbre creux d'entraînement du renvoi d'angle 15, un réacteur 14b, et un impulseur 14c solidaire du volant d'inertie V du moteur M non représenté. L'arbre 16 de prise de force est entraîné par l'arbre 17 de sortie du moteur M et passe entre les pignons 15a, 15b pour sortir du carter 13 et entraîner une pompe hydraulique non représentée.

Les trois lignes d'arbre décrites en référence aux figures 1 à 6 sont schématisées par les axes géométriques A1, A2, A3.

L'encombrement réduit du carter 13 et de la boîte de vitesses 12 selon l'invention correspond au montage des trois lignes d'arbre A1, A2, A3 sur des paliers étanches de type connu et ne nécessitant pas de description plus détaillée.

La réduction de l'encombrement dans le sens transversal permet d'obtenir une distance d entre la bride 13a et l'axe A3 de l'arbre 37 réduite, avantageusement comprise entre 200 et 500 mm et permet de monter sensiblement en alignement les arbres 9 et 10 à cardans et le troisième arbre 37, en évitant ainsi l'addition de toute transmission intermédiaire et de tout engrenage supplémentaire.

L'arbre 37 est ainsi avantageusement situé, après montage, sensiblement sur le plan médian longitudinal de la machine à laquelle la boîte de vitesses 12 est destinée.

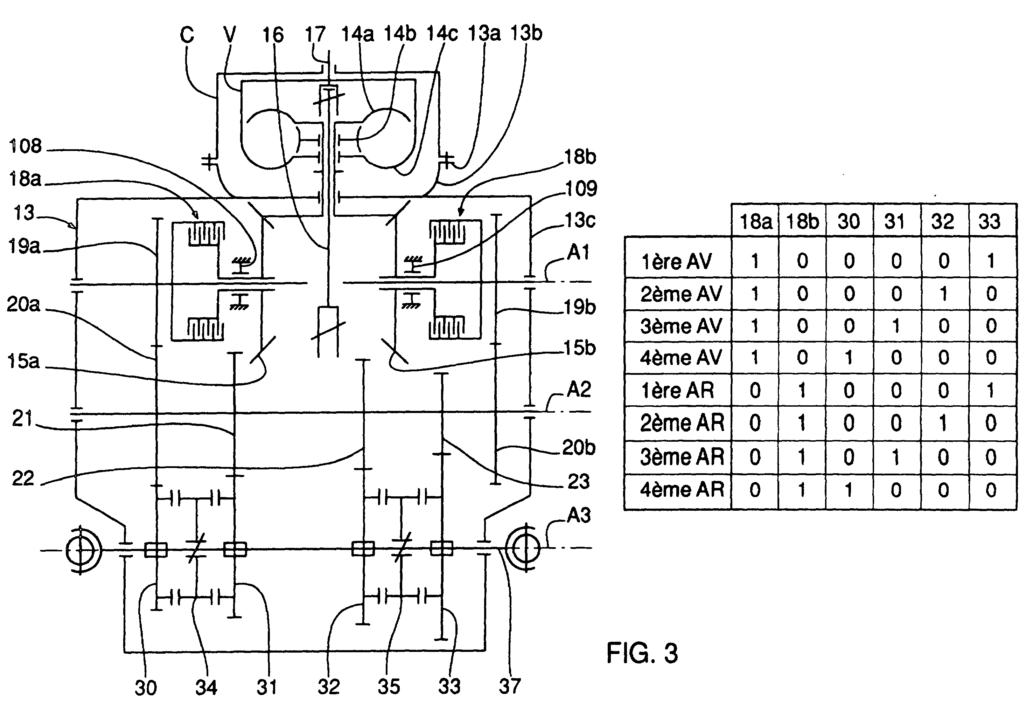

La figure 3 représente schématiquement un premier mode de réalisation de boîte de vitesses selon l'invention destinée à un véhicule automoteur du genre décrit en référence à la figure 1 comportant des références identiques aux références des figures 1 ou 2.

Dans ce mode de réalisation, le carter 13 de boîte de vitesses 12 comporte une cloche 13b entourant le convertisseur de couple 14 ou embrayage équivalent, et une enceinte étanche 13c recevant un liquide hydraulique de lubrification des engrenages et des embrayages de la boîte de vitesses 12.

La cloche 13b du carter 13 de boîte de vitesses 12 est montée sur le carter C du volant moteur V par sa bride 13a.

La sélection du rapport de vitesse résulte de la coopération ou de l'activité réciproque des différents organes d'embrayage ou de crabotage mécanique, comme indiqué dans le tableau des vitesses dans lequel le chiffre 1 indique l'activité de l'embrayage 18a ou 18b, ou l'entraînement d'une couronne 34 ou 35 et des ponts moteurs 1 et 2 par une des roues dentées 30 à 33 de l'arbre 37, tandis que le chiffre 0 indique le point mort de l'embrayage 18a ou 18b ou l'absence d'activité d'une roue dentée 30 à 33 en état de roue libre sur l'arbre 37.

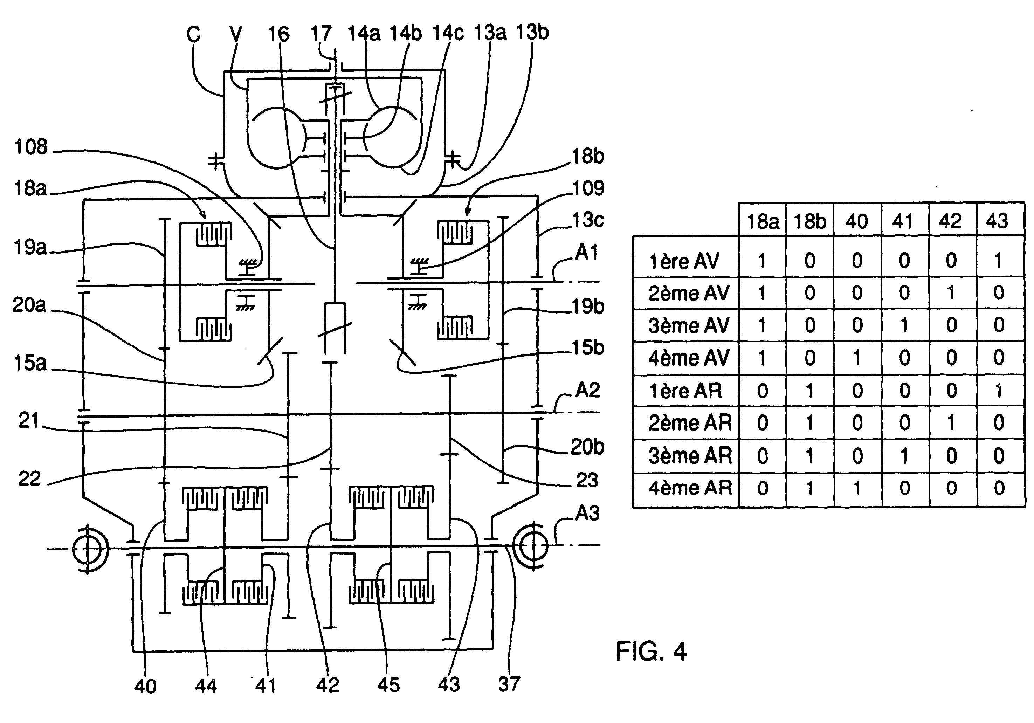

La figure 4 représente schématiquement un deuxième mode de réalisation de boîte de vitesses selon l'invention comportant des références identiques aux références de la figure 2.

Ce deuxième mode de réalisation diffère du premier mode de réalisation par l'arrangement mécanique de la troisième ligne d'arbre A3 qui comporte des embrayages doubles, permettant le changement des vitesses sous couple, transmission dite "powershift" par les spécialistes, à commandes électriques ou hydrauliques de type connu et non représentées en détail.

Dans les premier et deuxième modes de réalisation décrits en référence aux figures 3 et 4, il est possible de sélectionner quatre vitesses en marche avant et quatre vitesses en marche arrière, pour faire tourner l'arbre 37 au régime et au sens correspondants et transmettre son mouvement par les arbres à cardans 9 et 10 aux milieux des ponts moteurs 1 et 2.

La sélection du rapport de vitesse résulte de la coopération ou de l'activité réciproque des différents organes d'embrayage mécanique, comme indiqué dans le tableau des vitesses dans lequel le chiffre 1 indique l'activité de l'embrayage 18a ou 18b ou l'entraînement par une des roues 40 à 43 embrayée avec un plateau 44 ou 45 de l'arbre 37 et des ponts moteurs 1 et 2, tandis que le chiffre 0 indique le point mort de l'embrayage 18a ou 18b, ou l'absence d'embrayage d'une roue dentée 40 à 43 en état de roue libre sur l'arbre 37.

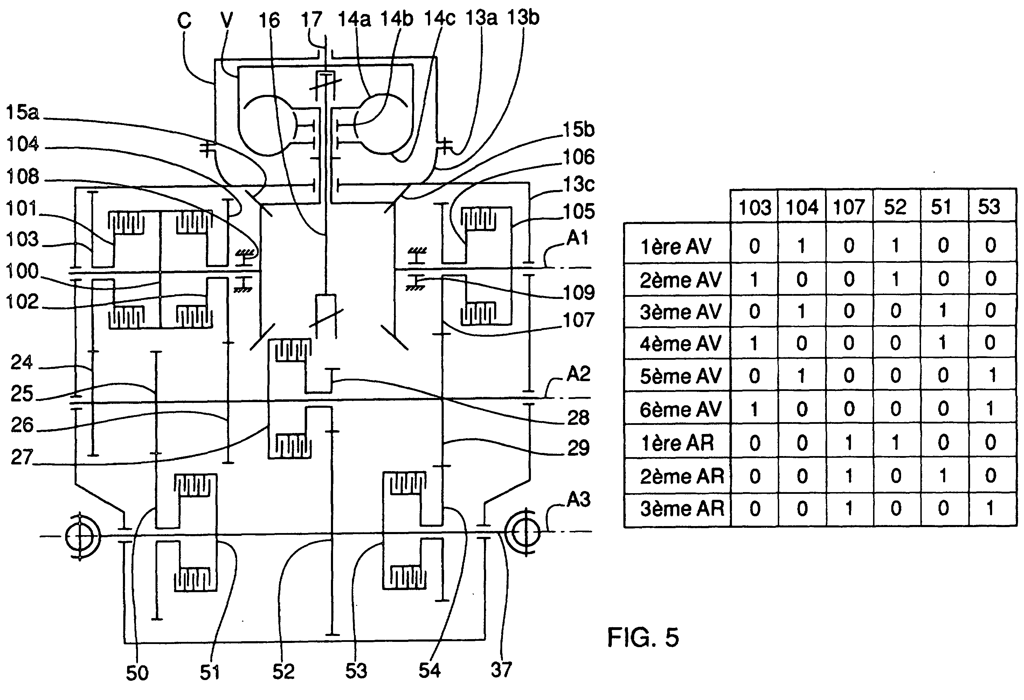

En référence à la figure 5, les éléments identiques ou fonctionnellement équivalents aux éléments de la figure 4 sont repérés par des chiffres de référence identiques.

Sur la figure 5, un troisième mode de réalisation de boîte de vitesses selon l'invention permet le changement des vitesses sous couple, transmission dite "powershift" par les spécialistes, en modifiant les agencements mécaniques des trois lignes d'arbre A1, A2, A3. Ces agencements comportent par exemple des paliers 108 et 109 de support intermédiaire pour la première ligne d'arbre A1 comportant le double pignon conique 15a ou 15b, un double embrayage hydraulique de marche avant à trois plateaux 100-101-102, et des roues dentées associées 103 et 104 solidaires respectivement des plateaux 101 et 102 , et un embrayage hydraulique à deux plateaux 105-106 de marche arrière avec une roue dentée 107 associée solidaire du plateau 106. Les roues dentées 103, 104 et 107 de la première ligne d'arbre A1 engrènent continûment avec des roues dentées correspondantes 24, 26 et 29 de la deuxième ligne d'arbre A2.

Une roue 25 ou 28 ou 29 de la deuxième ligne d'arbre A2 peut transmettre le mouvement de la deuxième ligne d'arbre A2 au troisième arbre 37, en fonction de la sollicitation des divers embrayages de la boîte, et en particulier de l'embrayage 27-28 de la deuxième ligne d'arbre A2.

Les roues dentées 25, 28 et 29 engrènent avec des roues dentées 50, 52 et 54 du troisième arbre 37 : les première et troisième roues dentées 50 et 54 sont montées débrayables et embrayables sous l'action des moyens d'embrayage 50-51 et 53-54 respectivement. La deuxième roue dentée 52 est montée solidaire de l'arbre 37, du fait que la roue dentée 28 de la deuxième ligne d'arbre A2 est débrayable.

Ces agencements permettent d'obtenir six vitesses en marche avant et trois vitesses en marche arrière, comme il résulte du tableau de vitesses indiquant l'état d'entraînement (1) ou non (0) d'une des roues dentées 103, 104 ou 107 ou d'un organe 51, 52 ou 53 du troisième arbre 37 en fonction de la sollicitation des divers embrayages de marche avant 100-101, 100-102, ou de marche arrière 105-106 et des embrayages de sélection 50-51, 27-28, 53-54 des deux lignes d'arbre A2 et A3.

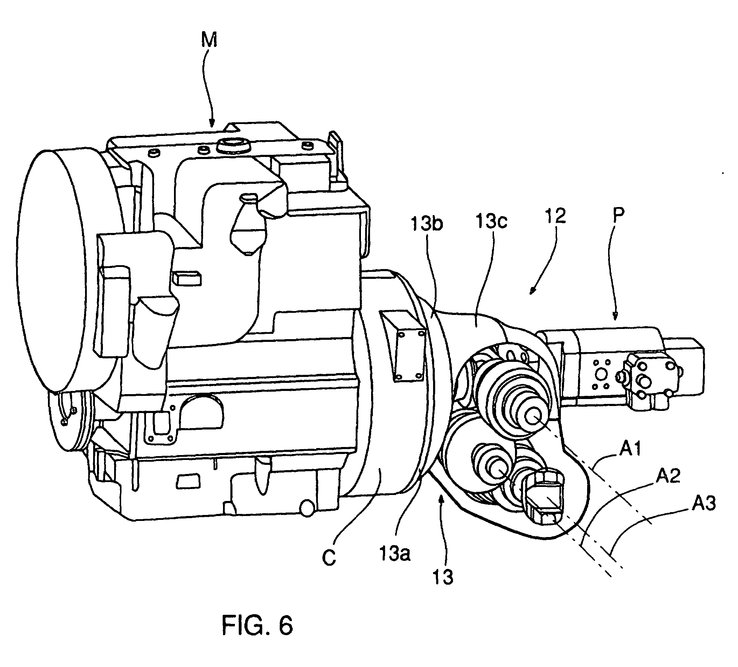

En référence à la figure 6, un agencement à trois lignes d'arbre parallèles A1, A2, A3 de boîte de vitesses selon l'invention procure l'avantage de disposer des sorties d'arbre pour entraîner les ponts avant et arrière sensiblement dans le plan désiré (en général le plan médian longitudinal de la machine correspondante), et permet en outre de réduire notablement l'encombrement longitudinal de l'ensemble mécanique comprenant le moteur M et la boîte de vitesses 12.

Egalement, le passage prévu au travers de l'arbre creux du convertisseur 14 pour transmettre le mouvement de l'arbre moteur 17 permet de réduire l'encombrement transversal du montage des pompes hydrauliques P entraînées par l'arbre 16 de prise de force, de manière que l'assemblage représenté comprenant le moteur M, la boîte de vitesses 12 et ces pompes hydrauliques P présente un encombrement transversal limité.

En outre, l'utilisation du renvoi d'angle 15 à double pignon conique 15a, 15b fournissant alternativement la marche avant et la marche arrière permet de se dispenser d'un arbre relais inverseur de sens de rotation pour la marche arrière.

L'invention décrite en référence à des modes de réalisation particuliers n'y est nullement limitée, mais couvre au contraire toute modification de forme et toute variante de réalisation dans le cadre des revendications.

Ainsi, l'invention couvre également toute variante de réalisation non représentée de boîte de vitesses comportant au moins trois et au plus quatre lignes d'arbre parallèles et orientées sensiblement longitudinalement, présentant un encombrement réduit, et de construction simple et économique. A cet effet, on peut utiliser un renvoi d'angle à simple pignon conique au lieu du renvoi d'angle à double pignon conique décrit en référence aux figures 1 à 6, de manière à réduire l'encombrement longitudunal de la boîte de vitesses d'une longueur correspondant au pignon 15b de marche arrière, à l'embrayage associé 18b et à la roue dentée de marche arrière 19b. Cette modification réductrice d'encombrement impose de prévoir un quatrième arbre, à savoir un arbre inverseur de marche arrière, parallèle aux trois lignes d'arbre A₁, A₂, A₃ décrites en référence aux figures 1 à 6.

Cet arbre inverseur de marche arrière coopère de manière débrayable avec les arbres A₁ et A₂ ; lorsque cet arbre inverseur est débrayé, la boîte de vitesses selon l'invention fonctionne en marche avant ; lorsque cet arbre inverseur est embrayé, le mouvement de l'arbre A₁ entraîne l'arbre inverseur qui entraîne à son tour l'arbre A₂ et la boîte de vitesses fonctionne en marche arrière.

L'augmentation de la dimension de la boîte de vitesses dans le sens transversal en raison de l'addition de cet arbre inverseur est compensée par la diminution de l'encombrement longitudinal de la boîte de vitesses, de sorte que le volume du carter de cette variante de réalisation est comparable au volume du carter 13 décrit en référence aux figures 5 à 6.

## Revendications

1. véhicule automoteur à bras chargeur télescopique, du type comportant deux ponts avant et arrière (1, 2) munis de roues, et un moteur (M) à combustion interne orienté transversalement entraînant une boîte de vitesses (12) destinée à transmettre directement ou indirectement le mouvement d'entraînement du moteur (M) à combustion interne à au moins un pont avant (1) ou arrière (2) muni de roues motrices (3, 4 ; 6, 7) par l'intermédiaire d'au moins un arbre (9, 10) orienté longitudinalement, **caractérisé en ce que** le carter (13) de la boîte de vitesse (12) contient un renvoi d'angle (15), dont l'entrée orientée transversalement est apte à être entraînée par un moyen d'embrayage, par exemple un convertisseur (14) de couple, et dont la sortie orientée longitudinalement définit une première ligne d'arbre de la boîte de vitesses (12), et **en ce que** le carter de la boîte de vitesses contient au moins trois et au plus quatre lignes d'arbre parallèles : ladite première ligne d'arbre correspondant au renvoi d'angle (15), un deuxième arbre intermédiaire de transmission entre la première ligne d'arbre et une troisième ligne d'arbre correspondant à l'arbre/aux arbres d'entraînement de pont moteur avant (1) et/ou arrière (2), de manière à réduire l'encombrement longitudinal de la boîte de vitesses.

2. Véhicule automoteur à bras chargeur télescopique selon la revendication 1, **caractérisé en ce que** la boîte de vitesses comporte en outre un arbre traversant (16) de prise de force, agencé pour entraîner une pompe génératrice d'énergie hydraulique ou hydrostatique.

3. Véhicule automoteur à bras chargeur télescopique selon la revendication 1 ou la revendication 2, **caractérisé en ce que** le renvoi d'angle (15) comporte un double pignon conique : un pignon de marche avant (15a) et pignon de marche arrière (15b), avec au moins un embrayage associé (18a ou 18b).

4. Véhicule automoteur à bras chargeur télescopique selon la revendication 1, **caractérisé en ce que** la première ligne d'arbre correspondant au renvoi d'angle (15) comporte un double pignon conique (15a, 15b) engrenant avec un pignon conique apte à être entraîné par l'arbre de sortie du moteur (M) et un double embrayage pour l'entraînement sélectif d'une roue dentée de marche avant ou d'une roue dentée de marche arrière, et **en ce que** ces deux roues dentées de marche avant et de marche arrière engrènent continûment avec des roues dentées du deuxième arbre intermédiaire de transmission.

5. Véhicule automoteur à bras chargeur télescopique selon la revendication 1 ou la revendication 4, **caractérisé en ce que** la deuxième ligne d'arbre comporte plusieurs roues dentées de transmission du mouvement imprimé par la première ligne d'arbre à des roues dentées correspondantes de la troisième ligne d'arbre avec lesquelles elles sont constamment en prise.

6. Véhicule automoteur à bras chargeur télescopique selon la revendication 5, **caractérisé en ce que** lesdites roues dentées (30-33) correspondantes de la troisième ligne d'arbre sont montées libres en rotation sur le troisième arbre, en étant aptes à entraîner ce troisième arbre sous l'action de moyens d'embrayage ou de crabotage.

7. Véhicule automoteur à bras chargeur télescopique selon la revendication 1, **caractérisé en ce que** la première ligne d'arbre comporte un double embrayage hydraulique de marche avant (100-101-102), de manière à fournir un nombre de vitesses en marche avant plus important que le nombre de vitesses en marche arrière.

8. Véhicule automoteur à bras chargeur télescopique selon la revendication 1 ou la revendication 2, **caractérisé en ce que** la troisième ligne d'arbre comporte deux sorties d'arbre destinées à entraîner simultanément un pont moteur avant et un pont moteur arrière du véhicule automoteur à bras chargeur télescopique.

9. Véhicule automoteur à bras chargeur télescopique selon la revendication 1 ou 2, **caractérisé en ce que** le carter de la boîte de vitesses contient un renvoi d'angle à simple pignon conique et un quatrième arbre inverseur de marche arrière parallèle aux première, deuxième et troisième lignes d'arbre.

## Patentansprüche

1. Kraftfahrzeug mit Teleskopladearm des Typs mit je einer mit Rädern versehenen, angetriebenen Vorderachse (1) und angetriebenen Hinterachse (2), einem quer angeordneten, ein Schaltgetriebe (12) antreibenden Verbrennungsmotor (M) zum direkten oder indirekten Übertragen der Antriebsbewegung des Verbrennungsmotors (M), mittels wenigstens einer in Längsrichtung angeordneten Welle (9, 10), auf wenigstens eine Vorderachse (1) oder eine Hinterachse (2), die jeweils mit angetriebenen Rädern (3, 4; 6, 7) versehen sind, **dadurch gekennzeichnet, dass** im Gehäuse (13) des Schaltgetriebes (12) ein Winkeltrieb (15) angeordnet ist, dessen quer angeordneter Eingangsteil geeignet ist, durch eine Kupplungsanordnung, beispielsweise einem Drehmomentwandler (14) angetrieben zu werden und dessen in Längsrichtung angeordnetes Ausgangsteil eine erste Welle des Schaltgetriebes (12) bildet und dass im Gehäuse des Schaltgetriebes, um den Raumbedarf des Schaltgetriebes in Längsrichtung zu vermindern, wenigstens drei und höchstens vier parallele Wellenanordnungen vorhanden sind, wovon die erste Wellenanordnung zum Winkeltrieb (15) gehört und eine zweite Zwischenwellenanordnung der Übertragung von der ersten Wellenanordnung zu einer dritten Wellenanordnung dient, die die Antriebswelle(n) für die angetriebene Vorderachse (1) und/oder die angetriebene Hinterachse (2) darstellt.

2. Kraftfahrzeug mit Teleskopladearm nach Anspruch 1, **dadurch gekennzeichnet, dass** das Schaltgetriebe des Weiteren eine durchlaufende Zapfwelle (16) aufweist, um eine Pumpe für eine hydraulische oder hydrostatische Energieerzeugung anzutreiben.

3. Kraftfahrzeug mit Teleskopladearm nach Anspruch 1 oder Anspruch 2, **dadurch gekennzeichnet, dass** der Winkeltrieb (15) eine doppelte Kegelradanordnung aufweist: ein Kegelrad (15a) für die Vorwärtsfahrt und ein Kegelrad (15b) für die Rückwärtsfahrt, denen wenigstens eine Kupplung (18a oder 18b) zugeordnet ist.

4. Kraftfahrzeug mit Teleskopladearm nach Anspruch 1, **dadurch gekennzeichnet, dass** die erste, dem Winkeltrieb (15) entsprechende Welle doppelte Kegelräder (15a, 15b), die mit einem von der Ausgangswelle des Motors (M) angetriebenen Kegelrad zusammenwirken und eine Doppelkupplung zum wahlweise Antreiben eines Zahnrades für die Vorwärtsfahrt oder eines Zahnrades für die Rückwärtsfahrt aufweist und dass die beiden Zahnräder für die Vorwärtsfahrt und die Rückwärtsfahrt ständig im Eingriff mit Zahnrädern der zweiten Zwischenübertragungswelle in Eingriff stehen.

5. Kraftfahrzeug mit Teleskopladearm nach Anspruch 1 oder Anspruch 4, **dadurch gekennzeichnet, dass** die zweite Welle mehrere Zahnräder zur Übertragung der durch die erste Welle erzeugten Antriebs auf entsprechende Zahnräder der dritten Welle, mit denen sie ständig in Eingriff stehen, aufweist.

6. Kraftfahrzeug mit Teleskopladearm nach Anspruch 5, **dadurch gekennzeichnet, dass** die Zahnräder (30 bis 33) der dritten Welle frei drehbar auf dieser angeordnet sind und dafür eingerichtet sind, die dritte Welle bei Betätigung von Reibungskupplungen oder Klauenkupplungen in Drehung zu versetzen.

7. Kraftfahrzeug mit Teleskopladearm nach Anspruch 1, **dadurch gekennzeichnet, dass** die erste Welle eine hydraulische Doppelkupplung (100, 101, 102) für die Vorwärtsfahrt aufweist, um auf diese Weise für die Vorwärtsfahrt mehr Gänge als für die Rückwärtsfahrt schalten zu können.

8. Kraftfahrzeug mit Teleskopladearm nach Anspruch 1 oder Anspruch 2, **dadurch gekennzeichnet, dass** die dritte Welle zwei Ausgangswellen zum gleichzeitigen Antreiben einer angetriebenen Vorderachse und einer angetriebenen Hinterachse des Kraftfahrzeugs mit Teleskopladearm aufweist.

9. Kraftfahrzeug mit Teleskopladearm nach Anspruch 1 oder 2, **dadurch gekennzeichnet, dass** das Schaltgetriebegehäuse einen Winkeltrieb mit nur einem Kegelrad und eine vierte Welle zur Umkehrung der Fahrrichtung parallel zur ersten, zweiten und dritten Welle aufweist.

## Claims

1. Self-propelling vehicle with telescopic loading arm, of the type comprising two front and rear axles (1, 2) fitted with wheels, and an internal combustion engine (M) orientated transversely driving a gear box (12) designed to transmit directly or indirectly the drive movement of the internal combustion engine (M) to at least one front (1) or rear (2) axle fitted with driven wheels (3, 4; 6, 7) by means of at least one shaft (9, 10) orientated longitudinally, **characterised in that** the housing (13) of the gear box (12) contains an angled transmission (15) whose input orientated transversely is capable of being driven by clutch means, for example a torque converter (14), and whose output orientated longitudinally defines a first shaft line of the gear box (12), and **in that** the housing of the gear box contains at least three and at most four parallel shaft lines: the said first shaft line corresponding to the angled transmission, a second intermediary transmission shaft between the first shaft line and a third shaft line corresponding to the drive shaft(s) of the front and/or rear axle (2) so as to reduce the overall longitudinal dimensions of the gear box.

2. Self-propelling vehicle with telescopic loading arm according to claim 1, **characterised in that** the gearbox also comprises a transverse power take-off (16) shaft equipped to drive a hydraulic or hydrostatic energy generating pump.

3. Self-propelling vehicle with telescopic loading arm according to claim 1 or claim 2, **characterised in that** the angled transmission (15) comprises a double conical pinion: a forward drive pinion (15a) and a reverse drive pinion (15b), with at least one associated clutch (18a or 18b).

4. Self-propelling vehicle with telescopic loading arm according to claim 1 **characterised in that** the first shaft line corresponding to the angled transmission (15) comprises a double conical pinion (15a, 15b) engaging with a conical pinion capable of being driven by the output shaft of the engine (M) and a double clutch for the selective drive of a forward drive toothed wheel or a reverse drive toothed wheel, and **in that** these two forward drive and reverse drive toothed wheels engage continually with the toothed wheels of the second intermediary transmission shaft.

5. Self-propelling vehicle with telescopic loading arm according to claim 1 or claim 4, **characterised in that** the second shaft line comprises several toothed wheels for transmitting the movement transmitted by the first shaft line to the corresponding toothed wheels of the third shaft line with which they are constantly in engagement.

6. Self-propelling vehicle with telescopic loading arm according to claim 5, **characterised in that** the said corresponding toothed wheels (30 - 33) of the third shaft line are assembled to rotate freely on the third shaft, being capable of driving this third shaft under the action of clutch or means.

7. Self-propelling vehicle with telescopic loading arm according to claim 1, **characterised in that** the first line shaft comprising a forward drive hydraulic double clutch (100 - 101 - 102), so as to supply a number of forward gears greater than the number of reverse gears.

8. Self-propelling vehicle with telescopic loading arm according to claim 1 or claim 2, **characterised in that** the first shaft line comprises two shaft outputs designed to drive simultaneously a front driving axle and a rear driving axle of the self-propelling vehicle with telescopic loading arm.

9. Self-propelling vehicle with telescopic loading arm according to claim 1 or 2, **characterised in that** the housing of the gear box contains an angled transmission with a single conical pinion, and a fourth reverse inverter shaft parallel to the first, second and third shaft lines.
